Europäisches Patentamt

European Patent Office

Office européen des brevets

(19)

(11) Numéro de publication : **0 088 096**
**B1**

(12) # FASCICULE DE BREVET EUROPÉEN

(45) Date de publication du fascicule du brevet :
**03.04.85**

(51) Int. Cl.⁴ : **B 23 Q 1/02**

(21) Numéro de dépôt : **82902679.8**

(22) Date de dépôt : **09.09.82**

(86) Numéro de dépôt international :
**PCT/FR 82/00146**

(87) Numéro de publication internationale :
**WO/8300827 (17.03.83 Gazette 83/07)**

(54) **TOUR D'OUTILLEUR.**

(30) Priorité : **10.09.81 MC 153881**

(43) Date de publication de la demande :
**14.09.83 Bulletin 83/37**

(45) Mention de la délivrance du brevet :
**03.04.85 Bulletin 85/14**

(84) Etats contractants désignés :
**AT BE CH DE FR GB LI LU NL SE**

(56) Documents cités :
**FR-A- 937 700**
**FR-A- 1 517 992**
**FR-A- 2 381 935**
**FR-A- 2 448 965**

(73) Titulaire : **S.A. FOUQUET**
**Route de Paris, R.N. 19**
**F-77170 Brie Comte Robert (FR)**

(72) Inventeur : **ARVAI, Tibor**
**31, avenue Princesse Grace**
**Monte Carlo (MC)**

(74) Mandataire : **Schrimpf, Robert et al**
**Cabinet Regimbeau 26, Avenue Kléber**
**F-75116 Paris (FR)**

Jouve, 18, rue St-Denis, 75001 Paris, France

## Description

L'invention concerne un tour d'outilleur du type comportant un banc sur lequel sont montées deux poupées, généralement l'une fixe et l'autre mobile à translation sur le banc, pour le maintien de la pièce à façonner.

Les deux poupées déterminent respectivement l'axe de rotation de la pièce à façonner et doivent être parfaitement coaxiales, ce que l'on obtient progressivement par des interventions sur les poupées et sur le banc après usinage.

La présente invention vise à assurer une parfaite coaxialité des poupées du seul fait de leur fabrication.

Un autre but de l'invention est de fournir un tour dont le prix de revient soit sensiblement inférieur à celui des tours classiques de même type.

Le tour de l'invention, qui comporte un banc présentant une surface de glissement en forme de queue d'aronde et qui comporte deux poupées pour le montage sur le banc de la pièce à usiner, est caractérisé en ce que le banc est un profilé venu de filière dans sa forme définitive et dont un côté est profilé en forme de queue d'aronde et en ce que les poupées sont deux tronçons d'un même profilé venu de filière qui présente un côté en forme de queue d'aronde complémentaire de la queue d'aronde du banc, en sorte que la queue d'aronde de chaque poupée et la queue d'aronde du banc peuvent glisser l'une sur l'autre.

On décrira ci-après une réalisation typique d'un tour conforme à l'invention en référence aux figures du dessin joint, la description et les figures faisant apparaître d'autres caractéristiques de la présente invention, utiles ensemble ou séparément.

La figure 1 est une perspective schématique du banc et des poupées ;

La figure 2 est une coupe verticale d'une poupée sur le banc ;

La figure 3 est une coupe verticale d'un traînard en place sur le banc, et

La figure 4 est une perspective du traînard équipé d'un chariot transversal et d'un chariot supérieur.

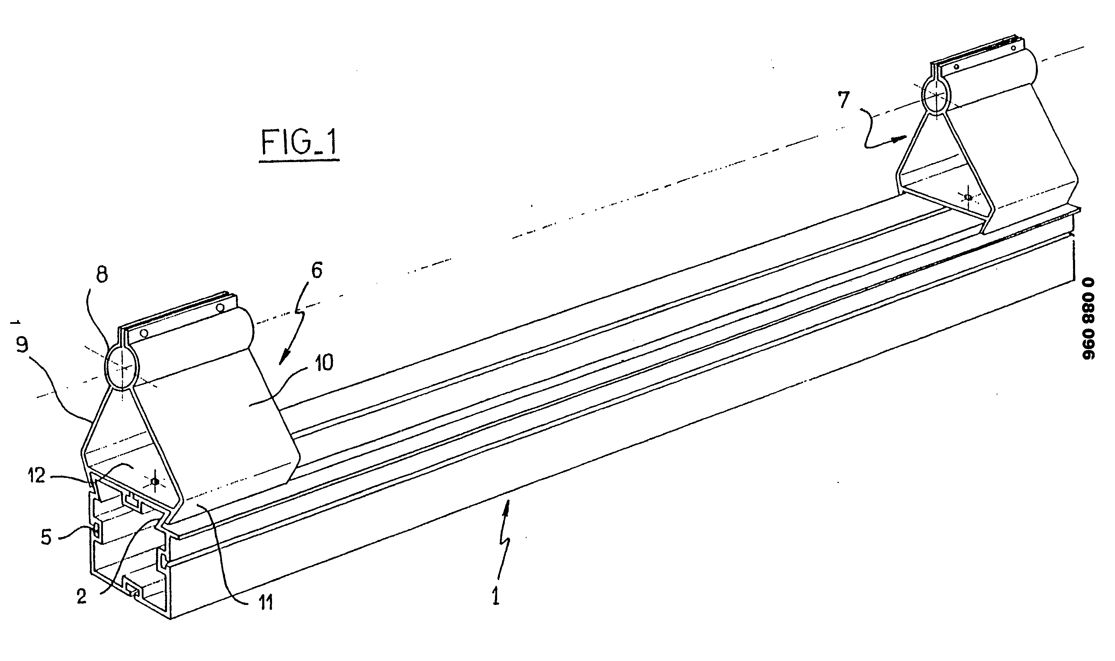

Le banc 1 (figures 1 à 3) est un tube rectangulaire en aluminium de haute précision sorti de filière dans sa forme définitive et coupé à la longueur désirée. (La technique actuelle permet d précisions meilleures que le 1/100e de millimètre).

La queue d'aronde 2 du banc est pourvue de rainures 3 pour recevoir des bandes de glissement 4, par exemple des lamelles d'acier à ressort, maintenues en place par collage ou autrement.

Le banc est pourvu sur ses faces de rainures 5 en T permettant la fixation de différents accessoires tels que des têtes de fraisage par exemple, ou différents bridages.

La poupée fixe 6 et la poupée mobile 7 proviennent d'un même profilé en aluminium, seules leurs longueurs diffèrent.

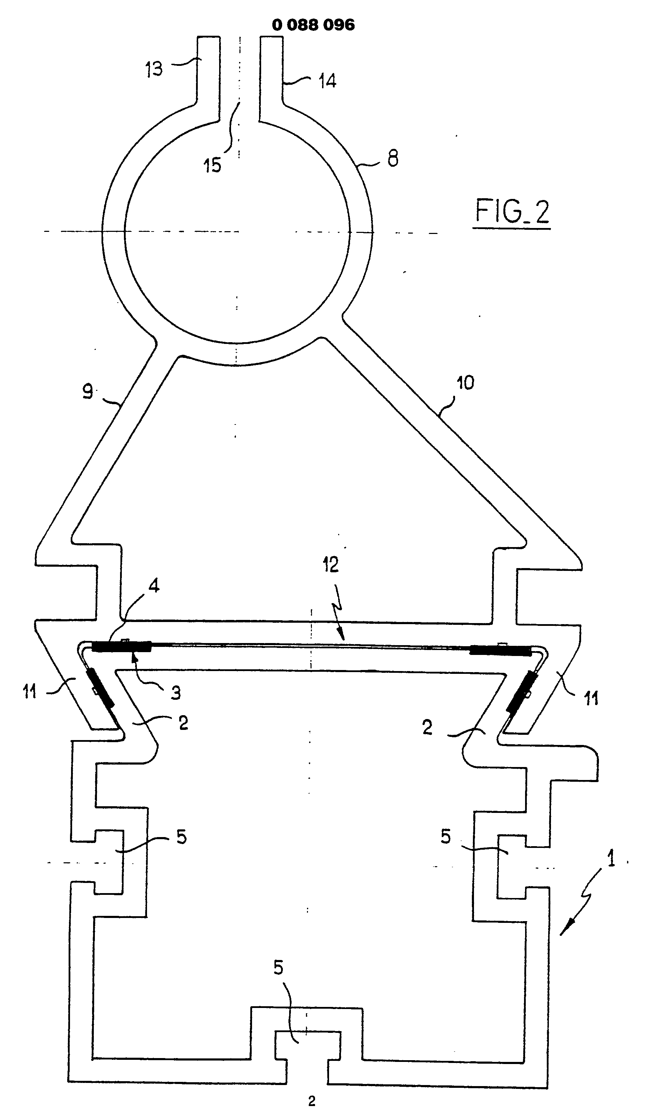

Le profilé des poupées comprend (figure 2) une partie cylindrique 8 et deux ailes 9, 10 coopérant pour constituer un socle sous la partie cylindrique, chaque aile présentant un bord supérieur de raccordement à la partie cylindrique et présentant un bord inférieur, les bords inférieurs des deux ailes coopérant pour constituer la queue d'aronde 11 de la poupée, et les deux ailes étant reliées par une traverse longitudinale 12.

La partie cylindrique 8 du profilé des poupées est fendue et comporte deux lèvres longitudinales 13, 14 de part et d'autre de la fente 15, ce qui permet le serrage du cylindre sans déplacement de l'axe du cylindre.

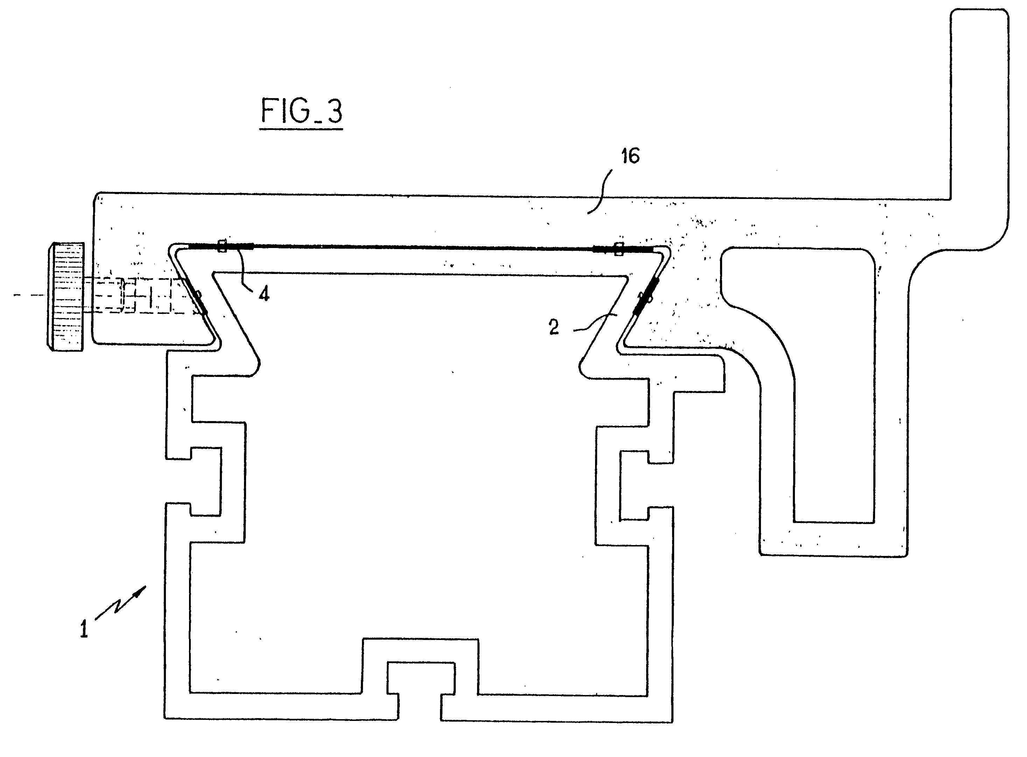

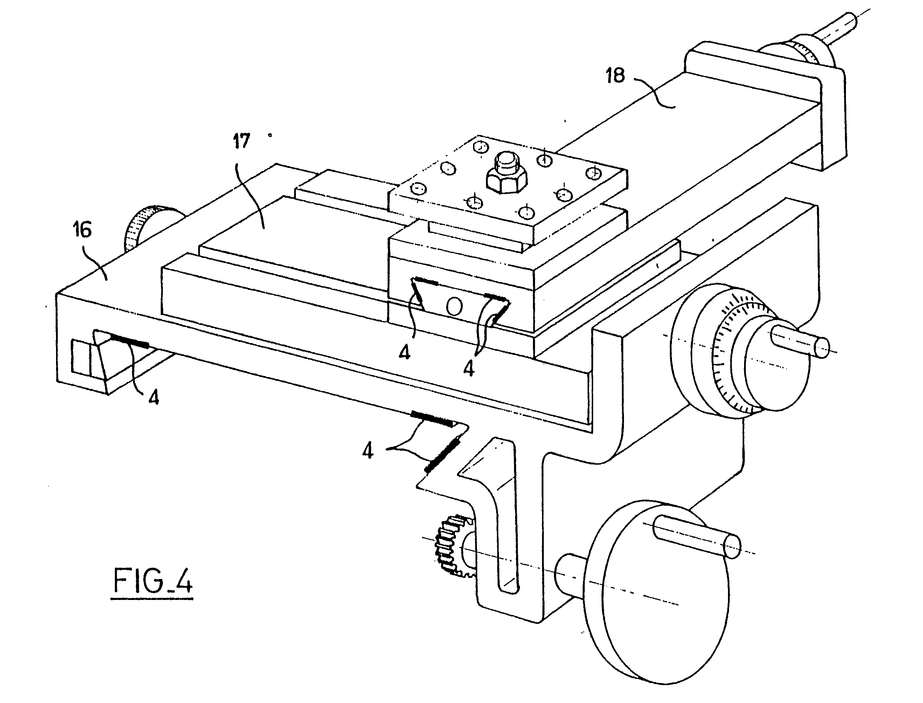

Le tour comporte un traînard porte-outil 16 (figure 3) comprenant de façon en soi connue (figure 4) un chariot transversal 17 et un chariot supérieur 18. Selon l'invention, le traînard et les deux chariots du traînard sont également des profilés d'aluminium venus de filière et qui présentent des queues d'aronde munies, comme le banc, de bandes de glissement 4.

Les formes des profilés peuvent varier sans sortir du cadre de l'invention. On remarquera par exemple que le profilé des poupées présente sur les figures 1 et 2 des ailes 9, 10 de formes différentes.

Les bandes de glissement sont réparties au choix sur l'une ou sur les deux queues d'aronde d'un couple de queues d'aronde coopérant.

Dans la réalisation représentée, la queue d'aronde de chaque poupée coiffe la queue d'aronde du banc sur laquelle elle est enfilée. Dans une variante, les formes et les positions des queues d'aronde sont inversées.

On obtient d'autres variantes en remplaçant les moyens décrits par des moyens équivalents, c'est-à-dire remplissant les mêmes fonctions.

On n'a pas représenté sur les figures les autres éléments qui équipent normalement le tour (moteur d'entraînement, crémaillères, mandrin, contre-pointe, etc.), car l'invention ne porte pas sur ces éléments qui restent classiques.

Les profilés sont de préférence en alliage d'aluminium mais il est prévu de le réaliser, en variante, dans d'autres alliages et matières offrant les qualités désirées de résistance mécanique et aptes à être filées.

## Revendications

1. Tour d'outilleur qui comporte un banc (1) présentant une surface de glissement en forme de queue d'aronde (2) et qui comporte deux poupées (6, 7) pour le montage sur le banc de la pièce à usiner, caractérisé en ce que le banc est un profilé venu de filière dans sa forme définitive et dont un côté est profilé en forme de queue d'aronde et en ce que les poupées sont deux tronçons d'un même profilé venu de filière qui présente un côté en forme de queue d'aronde (11) complémentaire de la queue d'aronde du banc, en sorte que la queue d'aronde de chaque poupée et la queue d'aronde du banc peuvent glisser l'une sur l'autre.

2. Tour d'outilleur selon la revendication 1, caractérisé en ce que le profilé qui constitue le banc (1) est un tube de forme générale rectangulaire.

3. Tour d'outilleur selon la revendication 2, caractérisé en ce que le profilé tubulaire qui constitue le banc (1) comporte sur un ou plusieurs côtés des rainures longitudinales (5) en forme de T pour la fixation d'accessoires.

4. Tour d'outilleur selon l'une des revendications 1 à 3, caractérisé en ce que le profilé des poupées (6, 7) comprend une partie cylindrique (8) et deux ailes (9, 10) coopérant pour constituer un socle sous la partie cylindrique, chaque aile présentant un bord supérieur de raccordement à la partie cylindrique et présentant un bord inférieur, les bords inférieurs des deux ailes coopérant pour constituer la queue d'aronde (11) de la poupée, et les deux ailes étant reliées par une traverse longitudinale (12).

5. Tour d'outilleur selon la revendication 4, caractérisé en ce que la partie cylindrique (8) du profilé des poupées est fendue et comporte deux lèvres longitudinales (13, 14) de part et d'autre de la fente (15).

6. Tour d'outilleur selon l'une des revendications 1 à 5 et qui comporte un traînard (16) comprenant un chariot transversal (17) et un chariot supérieur (18), caractérisé en ce que les deux chariots et le traînard sont également des profilés d'aluminium venus de filière et qui présentent des queues d'aronde.

7. Tour d'outilleur selon l'une des revendications 1 à 6, caractérisé en ce que les queues d'aronde du banc (1) et/ou des poupées (6, 7) et/ou du traînard (16) présentent des rainures longitudinales pour recevoir des bandes de glissement (4).

8. Tour selon l'une des revendications 1 à 7, caractérisé en ce que lesdits profilés sont en aluminium.

## Claims

1. A tool-maker's lathe which comprises a bed (1) presenting a slide surface in the form of a dovetail (2) and which comprises two heads (6, 7) for mounting the workpiece on the bed, is characterised in that the bed is a die-shaped section in its final form and of which one side is shaped in the form of a dovetail and in that the heads are two portions of the same die-haped section which presents one side in the form of a dovetail (11) complementary to that of the bed so that the dovetail of each head and the dovetail of the bed can slide one on the other.

2. A tool-maker's lathe according to claim 1, characterised in that the section which constitutes the bed (1) is a tube of generally rectangular form.

3. A tool-maker's lathe according to claim 2, characterised in that the tubular section which constitutes the bed (1) has on one or more sides T-shaped longitudinal grooves (5) for the fitting of accessories.

4. A tool-maker's lathe according to any one of claims 1 to 3, characterised in that the section of the heads (6, 7) comprises a cylindrical part (8) and two wings (9, 10) cooperating to constitute a stand below the cylindrical part, each wing presenting an upper edge connecting to the cylindricalpart and presenting a lower edge, the lower edges of the two wings cooperating to constitute the dovetail (11) of the head, and two wings being connected by a transverse longitudinal (12).

5. A tool-maker's lathe according to claim 4, characterised in that the cylindrical part (8) of the section of the heads is split and has two longitudinal lips (13, 14) on either side of the split (15).

6. A tool-maker's lathe according to any one of claims 1 to 5 and which has a saddle (16) comprising a cross-slide (17) and a compound slide (18), characterised in that the two slides and the saddle are also die-shaped aluminium sections and which present dovetails.

7. A tool-maker's lathe according to any one of claims 1 to 6, characterised in that the dovetails of the bed (1) and/or of the heads (6, 7) and/or of the saddle (16) present longitudinal grooves for receiving bearing strips (4).

8. A tool-maker's lathe according to any one of claims 1 to 7, characterised in that the said extrusions are of aluminium.

## Ansprüche

1. Drehbank für Werkzeugmacher, welche ein Bett (1) mit einer Führungsbahn in Schwalbenschwanzform und zwei Stöcke (6, 7) zum Einspannen des Werkstückes auf dem Bett aufweist, dadurch gekennzeichnet, daß das Bett ein durch ein Schneideisen in seine endgültige Form gebrachtes Profil ist, dessen eine Seite schwalbenschwanzförmig ausgekehlt ist, und daß die Stöcke zwei Stücke eines gleichen durch ein Schneideisen in die endgültige Form gebrachten Profiles sind, welches eine schwalbenschwanzförmige, zum Schwalbenschwanz des Bettes komplementäre Seite (11) aufweist, so daß die Schwalbenschwanzform jedes Stockes und die Schwalbenschwanzform des Bettes aneinander gleiten können.

2. Drehbhank für Werkzeugmacher nach Anspruch 1, dadurch gekennzeichnet, daß das Profil, aus dem das Bett (1) gebildet ist, ein Rohr von im wesentlichen rechteckiger Form ist.

3. Drehbank für Werkzeugmacher nach Anspruch 2, dadurch gekennzeichnet, daß das rohrförmige Profil, aus dem das Bett (1) gebildet ist, auf einer oder mehreren Seiten T-förmige Längsrillen (5) zur Befestigung de Zubehörs aufweist.

4. Drehbank für Werkzeugmacher nach einem der Ansprüche 1 bis 3, dadurch gekennzeichnet, daß das Profil der Stöcke (6, 7) einen zylindrischen Teil (8) und zwei zusammenstrebende Flügel (9, 10) aufweist, welche unterhalb des zylindrischen Teils einen Sockel bilden, wobei jeder Flügel einen oberen Rand zur Verbindung mit dem zylindrischen Teil und einen unteren Rand aufweist und die unteren Ränder der beiden Flügel zusammenstreben, um die Schwalbenschwanzform (11) des Stockes zu bilden, und die beiden Flügel durch eine Längsstange (12) miteinander verbunden sind.

5. Drehbank für Werkzeugmacher nach Anspruch 4, dadurch gekennzeichnet, daß der zylindrische Teil (8) des Profils der Stöcke gespalten ist und zwei Längszungen (13, 14) zu beiden Seiten des Spaltes (15) aufweist.

6. Drehbank für Werkzeugmacher nach einem der Ansprüche 1 bis 5, welche einen Support (16) mit einem Querschlitten (17) und einem Oberschlitten (18) aufweist, dadurch gekennzeichnet, daß die beiden Schlitten und der Support ebenfalls durch ein Schneideisen erhaltene Aluminiumprofile sind und Schwalbenschwanzform aufweisen.

7. Drehbank nach einem der Ansprüche 1 bis 6, dadurch gekennzeichnet, daß die Schwalbenschwänze des Bettes (1) und/oder die Stöcke (6, 7) und/oder der Support (16) Längsrillen zur Aufnahme der Gleitbahnen (4) aufweisen.

8. Drehbank nach einem der Ansprüche 1 bis 7, dadurch gekennzeichnet, daß die Profile aus Aluminium bestehen.

FIG_1

0 088 096

FIG. 2

FIG_3

FIG.4

0 088 096